# EUROPÄISCHE PATENTSCHRIFT

(11) **EP 4 457 164 B1**
(45) Veröffentlichungstag und Bekanntmachung des Hinweises auf die Patenterteilung: **30.04.2025**
(21) Anmeldenummer: 23762234.5
(22) Anmeldetag: 29.08.2023
(51) Int. Cl.: B65G 47/91, B65G 65/00

(54) **VORRICHTUNG ZUM ENTNEHMEN VON PHARMAZEUTISCHEN EINZELBEHÄLTNISSEN AUS EINEM WANNENFÖRMIGEN TRANSPORTBEHÄLTER, EIN SYSTEM UMFASSEND EINE ENTSPRECHENDE VORRICHTUNG UND EIN VERFAHREN ZUM ENTNEHMEN VON PHARMAZEUTISCHEN EINZELBEHÄLTNISSEN AUS EINEM WANNENFÖRMIGEN TRANSPORTBEHÄLTER**
DEVICE FOR REMOVING INDIVIDUAL PHARMACEUTICAL VESSELS FROM A TROUGH-SHAPED TRANSPORT CONTAINER, A SYSTEM COMPRISING A CORRESPONDING DEVICE, AND A METHOD FOR REMOVING INDIVIDUAL PHARMACEUTICAL VESSELS FROM A TROUGH-SHAPED TRANSPORT CONTAINER
DISPOSITIF POUR RETIRER DES RÉCIPIENTS PHARMACEUTIQUES INDIVIDUELS D'UN RÉCIPIENT DE TRANSPORT EN FORME D'AUGE, SYSTÈME COMPRENANT UN DISPOSITIF CORRESPONDANT ET PROCÉDÉ POUR RETIRER DES RÉCIPIENTS PHARMACEUTIQUES INDIVIDUELS D'UN RÉCIPIENT DE TRANSPORT EN FORME D'AUGE

(30) Priorität: 23.11.2022 DE 102022131001
(43) Veröffentlichungstag der Anmeldung: 06.11.2024
(73) Patentinhaber: Syntegon Technology GmbH, 71332 Waiblingen (DE)
(72) Erfinder: LEIDIG, Jürgen, 74586 Frankenhardt (DE); WEBER, Florian, 74564 Crailsheim (DE); JUNGBLUT, Margarita, 74589 Satteldorf (DE)
(74) Vertreter: Novagraaf Group
(86) Internationale Anmeldenummer: PCT/EP2023/073612
(87) Internationale Veröffentlichungsnummer: WO 2024/110082

(56) Entgegenhaltungen:
- DE-A1- 102007 024 771
- DE-U1- 202010 008 173
- DE-U1- 202021 102 751

## Beschreibung

Die vorliegende Erfindung betrifft eine Vorrichtung zum Entnehmen von pharmazeutischen Einzelbehältnissen aus einem wannenförmigen Transportbehälter. Außerdem betrifft die vorliegende Erfindung ein System umfassend eine entsprechende Vorrichtung und einen wannenförmigen Transportbehälter, in dem pharmazeutische Einzelbehältnisse gelagert sind. Weiterhin betrifft die vorliegende Erfindung ein Verfahren zum Entnehmen von pharmazeutischen Einzelbehältnissen aus einem wannenförmigen Transportbehälter.

In der pharmazeutischen Industrie werden Arzneimittel oder medizinische Wirkstoffe oftmals in pharmazeutische Einzelbehältnisse abgefüllt. Beispiele für solche Einzelbehältnisse sind Vials bzw. Injektionsfläschchen, Spritzen oder Karpulen. Pharmazeutische Einzelbehältnisse werden herkömmlicherweise in wannenförmigen Transportbehältern gelagert, insbesondere vor Abfüllung der Arzneimittel oder medizinischen Wirkstoffe in die Einzelbehältnisse. Ein Beispiel für einen wannenförmigen Transportbehälter sind sogenannte Trays, in denen pharmazeutische Einzelbehältnisse in der Regel lose nebeneinanderstehend gelagert sind.

Typischerweise werden wannenförmige Transportbehälter mit darin verpackten pharmazeutischen Einzelbehältnissen automatisiert gehandhabt. Das Entnehmen der Einzelbehältnisse stellt insbesondere bei lose nebeneinanderstehend gelagerten Einzelbehältnissen einen anspruchsvollen Handhabungsschritt dar. Aus der Praxis sind Vorrichtungen bekannt, bei denen eine schwerkraftgestützte Entnahme der Einzelbehältnisse aus dem Transportbehälter stattfindet. Solche Vorrichtungen umfassen in der Regel eine plattenförmige Ablagestruktur mit einer insbesondere horizontal erstreckten Ablagefläche. Der Transportbehälter ist mitsamt den Einzelbehältnissen derart auf der Ablagestruktur anordenbar, dass eine Unterseite eines Bodens des Transportbehälters von der Ablagefläche weggerichtet ist und die Einzelbehältnisse auf der Ablagefläche oder vertikal beabstandet oberhalb der Ablagefläche angeordnet sind. Bekannte Vorrichtungen weisen typischerweise zudem eine Abnahmeeinrichtung zum Abnehmen des Transportbehälters von den pharmazeutischen Einzelbehältnissen auf. Bei der Abnahme kann jedoch das folgende Problem auftreten. Wird ein Einzelbehältnis durch Reibungskräfte und/oder elektrostatische Anziehungskräfte an dem Transportportbehälter gehalten, so bleibt das Einzelbehältnis beim Abnehmen des Transportbehälters nicht auf der Ablagefläche zurück, sondern wird zusammen mit dem Transportbehälter von der Ablagestruktur abgenommen. Von diesem Effekt können auch mehrere der Einzelbehältnisse betroffen sein. Das betroffene Einzelbehältnis bzw. die betroffenen Einzelbehältnisse stehen dann für den anschließenden Arbeitsschritt nicht zur Verfügung oder müssen von Hand aus dem Transportbehälter entnommen und auf der Ablagefläche angeordnet werden.

Die Gebrauchsmusterschrift DE 20 2010 008 173 U1 offenbart eine Handhabungseinrichtung für Waren, welche die Merkmale des Oberbegriffs des Anspruchs 1 aufweist.

Die Handhabungseinrichtung umfasst einen Träger mit einem lösbaren Zwischenboden, auf dem die Waren aufstehen. Die Handhabungseinrichtung umfasst außerdem eine Greifeinrichtung, die mit einer Saugglocke ausgerüstet ist, welche den Zwischenboden mitsamt der Waren mittels Unterdruck greifen kann.

Der Erfindung liegt die Aufgabe zugrunde, eine Möglichkeit bereitzustellen, pharmazeutische Einzelbehältnisse aus einem wannenförmigen Transportbehälter zu entnehmen, wobei eine sichere Ablösung der Einzelbehältnisse von dem Transportbehälter gegeben sein soll.

Diese Aufgabe wird erfindungsgemäß durch eine Vorrichtung nach Anspruch 1, durch ein System nach Anspruch 11 und durch ein Verfahren nach Anspruch 13 gelöst.

Die jeweiligen Unteransprüche und die Beschreibung geben vorteilhafte Varianten und Ausführungsformen an.

Erfindungsgemäß ist also eine Vorrichtung zum Entnehmen von pharmazeutischen Einzelbehältnissen, insbesondere Vials, aus einem wannenförmigen Transportbehälter, insbesondere Tray, vorgesehen. Die Vorrichtung umfasst eine plattenförmige Ablagestruktur mit einer insbesondere horizontal erstreckten Ablagefläche. Vorzugsweise ist die plattenförmige Ablagestruktur die Tischplatte eines Ablagetischs. Der Transportbehälter ist derart auf der Ablagestruktur anordenbar, dass eine Unterseite eines Bodens des Transportbehälters von der Ablagefläche weggerichtet ist und die Einzelbehältnisse auf der Ablagefläche oder vertikal beabstandet oberhalb der Ablagefläche angeordnet sind. Jedes der Einzelbehältnisse kann also auf der Ablagefläche angeordnet sein oder vertikal beabstandet oberhalb der Ablagefläche. Insbesondere sind einige der Einzelbehältnisse auf der Ablagefläche angeordnet und einige vertikal beabstandet oberhalb der Ablagefläche. Ist ein Einzelbehältnis auf der Ablagefläche angeordnet, so steht das Einzelbehältnis auf der Ablagefläche auf. Dies ist typischerweise bei solchen Einzelbehältnissen der Fall, die bereits von dem Transportbehälter gelöst sind. Wirken jedoch beispielsweise Reibungskräfte und/oder elektrostatische Anziehungskräfte zwischen einem Einzelbehältnis und dem Transportbehälter, so kann das Einzelbehältnis auch in dem Transportbehälter gehalten und vertikal beabstandet oberhalb der Ablagefläche angeordnet sein.

Die Vorrichtung umfasst weiter eine Abnahmeeinrichtung zum Abnehmen des Transportbehälters von den Einzelbehältnissen. Verschiedene mögliche Ausführungen der Abnahmeeinrichtung werden nachstehend noch näher erläutert.

Es ist nun vorgesehen, dass der Ablagestruktur eine Schwingungserzeugungseinrichtung zugeordnet ist, die ausgebildet ist, um die Ablagestruktur während eines Entnahmevorgangs wenigstens zeitweise zu einer Schwingungsbewegung anzuregen, welche auf den Transportbehälter und/oder auf die Einzelbehältnisse übertragbar ist, um die Einzelbehältnisse von dem Transportbehälter zu lösen. Wie zuvor erwähnt, kann es dazu kommen, dass eines oder mehrere der Einzelbehältnisse durch Reibungskräfte und/oder elektrostatische Anziehungskräfte an dem Transportbehälter gehalten werden. Durch die Schwingungsbewegung werden solche Einzelbehältnisse mit Beschleunigungskräften beaufschlagt, wodurch die Einzelbehältnisse von dem Transportbehälter gelöst werden. Die Abnahme des Transportbehälters führt dann dazu, dass tatsächlich alle Einzelbehältnisse zurückbleiben und nach Abschluss des Entnahmevorgangs auf der Ablagefläche angeordnet sind.

Vorzugsweise ist die Schwingungserzeugungseinrichtung ausgebildet, um die Ablagestruktur zu einer horizontalen Schwingungsbewegung anzuregen. Bei einer horizontalen Schwingungsbewegung wird die Ablagestruktur in horizontaler Richtung aus ihrem Grundzustand ausgelenkt. Alternativ dazu ist die Schwingungserzeugungseinrichtung ausgebildet, um die Ablagestruktur zu einer vertikalen Schwingungsbewegung anzuregen, also zu einer Schwingungsbewegung, bei der die Ablagestruktur in vertikaler Richtung aus ihrem Grundzustand ausgelenkt wird. Die Schwingungserzeugungseinrichtung kann die Ablagestruktur auch zu einer Schwingungsbewegung anregen, bei der die Ablagestruktur sowohl in horizontaler Richtung als auch in vertikaler Richtung aus ihrem Grundzustand ausgelenkt wird.

Vorzugsweise umfasst die Vorrichtung eine Wendeeinrichtung zum Umdrehen des Transportbehälters mit den darin angeordneten Einzelbehältnissen. Typischerweise wird der Transportbehälter vor dem Entnahmevorgang derart gehandhabt, dass die Unterseite des Bodens vertikal nach unten gerichtet ist. So wird vermieden, dass die Einzelbehältnisse aus dem Transportbehälter herausfallen. Für den schwerkraftgestützten Entnahmevorgang muss der Transportbehälter jedoch gewendet werden, sodass die Unterseite des Bodens des Transportbehälters dann vertikal nach oben gerichtet ist. Hierzu ist die Wendeeinrichtung vorhanden. Geeignete Wendeeinrichtungen sind bekannt. Solche Wendeeinrichtungen umfassen typischerweise eine Wendeeinheit, die um eine horizontal erstreckte Drehachse drehbar ist. Die Wendeeinheit umfasst eine Wendeplatte und wenigstens eine Haltestruktur zum formschlüssigen Halten des Transportbehälters. Der Transportbehälter ist in die Haltestruktur einschiebbar, wobei die Wendeplatte vertikal oberhalb des eingeschobenen Transportbehälters angeordnet ist. Wird die Wendeeinheit mit dem gehaltenen Transportbehälter um 180° gedreht, so wird der Transportbehälter gewendet. Die Wendeplatte ist nach Abschluss der Drehung vertikal unterhalb des Transportbehälters angeordnet, sodass die Wendeplatte ein Herausfallen von Einzelbehältnissen aus dem gewendeten Transportbehälter sperrt.

Gemäß einer bevorzugten Ausführungsform ist vorgesehen, dass die Schwingungserzeugungseinrichtung wenigstens einen in die Ablagestruktur integrierten Schwingungserzeuger umfasst, und/oder dass die Schwingungserzeugungseinrichtung wenigstens einen unabhängig von der Ablagestruktur handhabbaren und mit der Ablagestruktur mechanisch gekoppelten Schwingungserzeuger umfasst.

Vorzugsweise umfasst die Schwingungserzeugungseinrichtung wenigstens einen Unwuchtmotor und/oder wenigstens einen Magnetvibrator als Schwingungserzeuger. Ein Unwuchtmotor ist eine Rotationsmaschine, die eine Motorwelle mit einer Unwucht umfasst, sodass im Betrieb wegen der auftretenden Fliehkräfte kreisförmige mechanische Schwingungsbewegungen erzeugt werden. Mittels eines Unwuchtmotors können Schwingungsbewegungen der Ablagestruktur effektiv angeregt werden. Ein Magnetvibrator umfasst wenigstens einen ansteuerbaren Elektromagnet. Der Elektromagnet ist derart angeordnet, dass durch eine Ansteuerung des Elektromagneten eine Schwingungsbewegung der Ablagestruktur anregbar ist. Auch durch einen Magnetvibrator können Schwingungsbewegungen der Ablagestruktur effektiv angeregt werden. Zudem ergibt sich der Vorteil, dass eine gewünschte Schwingungsrichtung präzise realisiert werden kann. Vorzugsweise ist der Schwingungserzeuger an einer Unterseite, an einer Längsseite oder an einer Querseite der plattenförmigen Ablagestruktur angeordnet.

Vorzugsweise umfasst die Abnahmeeinrichtung wenigstens zwei Hubelemente zum Anheben des Transportbehälters, wobei die Hubelemente auf einander gegenüberliegenden Seiten der Ablagefläche angeordnet und senkrecht zu der Ablagefläche verlagerbar sind. Die Ablagefläche ist also zwischen den beiden Hubelementen angeordnet. Durch Verlagern der Hubelemente kann der Transportbehälter mit einer Druckkraft beaufschlagt werden, durch die der Transportbehälter angehoben wird. Ein solches Anheben des Transportbehälters führt allenfalls zu einer geringfügigen Verformung des Transportbehälters. Durch eine Verformung des Transportbehälters wäre die Entnahme der Einzelbehältnisse erschwert, da die Einzelbehältnisse in dem Transportbehälter eingeklemmt werden könnten. Weil die Hubelemente auf einander gegenüberliegenden Seiten der Ablagefläche angeordnet sind, kann ein Verkippen des Transportbehälters beim Anheben durch die Hubelemente sicher vermieden werden. Vorzugsweise weisen die Hubelemente jeweils eine Ausgangsschiebestellung auf, in welcher Hubflächen der Hubelemente bündig mit der Ablagefläche abschließen. Vorzugsweise sind die Hubelemente derart mechanisch miteinander gekoppelt, dass die Hubelemente nur gemeinsam verlagerbar sind. Die beiden Hubelemente bilden dann vorzugsweise unterschiedliche Hubabschnitte derselben Hubeinheit. Alternativ dazu sind die Hubelemente unabhängig voneinander senkrecht zu der Ablagefläche verlagerbar. Die gewünschte synchrone Verlagerung der Hubelemente wird dann durch eine entsprechende Ansteuerung von den Hubelementen zugeordneten Aktuatoren realisiert.

Gemäß einer bevorzugten Ausführungsform ist vorgesehen, dass die Hubelemente an einem jeweils anderen Rand der Ablagefläche angeordnet sind, und dass die Hubelemente jeweils eine Führungsfläche umfassen, die abstützungswirksam für mehrere auf der Ablagefläche angeordnete Einzelbehältnisse ist. Durch die Anordnung an dem jeweils anderen Rand der Ablagefläche begrenzen die Hubelemente die Ablagefläche an den betreffenden Rändern. Entsprechend verhindern die Hubelemente in dem Bereich, in dem sie angeordnet sind, ein Herunterfallen von Einzelbehältnissen von der Ablagefläche. Die Hubelemente umfassen dabei jeweils eine Führungsfläche, die abstützungswirksam für mehrere auf der Ablagefläche angeordnete Einzelbehältnisse ist. Die Führungsflächen können also aufgrund ihrer Dimensionierung jeweils mehrere Einzelbehältnisse gleichzeitig abstützen, wodurch eine wirksame Führung der Einzelbehältnisse mittels der Hubelemente erreicht wird. Vorzugsweise erstrecken sich die Hubelemente bzw. deren Führungsflächen jeweils entlang des gesamten Rands, an dem das betreffende Hubelement angeordnet ist. Bevorzugt ist die Ablagefläche rechteckig ausgebildet, wobei die Hubelemente dann an einem jeweils anderen Längsrand der Ablagefläche oder an einem jeweils anderen Querrand der Ablagefläche angeordnet sind.

Vorzugsweise umfasst die Abnahmeeinrichtung eine Greifeinheit zum Greifen des Transportbehälters. Die Greifeinheit kann dabei beispielsweise zum Greifen des Transportbehälters mittels Unterdruck, zum Greifen des Transportbehälters mittels Kraftschluss und/oder zum Greifen des Transportbehälters mittels Formschluss ausgebildet sein. Vorzugsweise ist die Greifeinheit zusätzlich zu den zuvor beschriebenen Hubelementen vorhanden. Dies ist im Hinblick auf die Abnahme des Transportbehälters von den Einzelbehältnissen besonders vorteilhaft. So kann der Abnahmebehälter zunächst durch die Hubelemente angehoben werden. Erst wenn der Transportbehälter durch die Hubelemente angehoben ist, wird der Transportbehälter dann durch die Greifeinheit gegriffen und entfernt. Die Greifeinheit kann jedoch auch anstelle der Hubelemente vorhanden sein.

Gemäß einer bevorzugten Ausführungsform ist vorgesehen, dass die Greifeinheit wenigstens ein Saugelement zum Ansaugen der Unterseite des Bodens des Transportbehälters umfasst, insbesondere wobei das Saugelement an einer Tragstruktur der Greifeinheit angeordnet ist. Die Unterseite des Bodens eines Transportbehälters ist typischerweise gut ansaugbar, weshalb diese Ausführung der Greifeinheit bevorzugt ist. Vorzugsweise umfasst die Greifeinheit mehrere Saugelemente, die gemeinsam eine Saugebene definieren. Es kann jedoch auch nur ein Saugelement vorhanden sein, welches dann alleine die Saugebene definiert.

Gemäß einer bevorzugten Ausführungsform ist vorgesehen, dass die Greifeinheit eine Handhabungsfläche zum Handhaben einer Seitenwand des wannenförmigen Transportbehälters umfasst, wobei die Handhabungsfläche gewinkelt zu der Saugebene der Greifeinheit ausgerichtet ist. Durch die Handhabungsfläche kann der Transportbehälter mit den darin angeordneten Einzelbehältnissen auf die Ablagestruktur verlagert werden, insbesondere durch Schieben des Transportbehälters. Vorzugsweise beträgt der Winkel zwischen der Saugebene und der Handhabungsfläche 60° bis 120°, bevorzugt 80° bis 100°. Besonders bevorzugt ist die Handhabungsfläche senkrecht zu der Ansaugfläche erstreckt. Bevorzugt ist eine die Handhabungsfläche umfassende Handhabungseinheit an der Tragstruktur der Greifeinheit befestigt, beispielsweise durch eine Strebe, die vorzugsweise parallel zu der Saugebene erstreckt ist.

Gemäß einer bevorzugten Ausführungsform umfasst die Vorrichtung eine Handhabungseinrichtung, die ausgebildet ist, um die Greifeinheit an den Transportbehälter heranzubewegen. Bevorzugt ist die Handhabungseinrichtung ausgebildet, um die Greifeinheit, insbesondere die Tragstruktur der Greifeinheit, zu greifen. Die Handhabungseinrichtung ist beispielsweise als Vierachsroboter oder als Sechsachsroboter ausgebildet.

Gemäß einer bevorzugten Ausführungsform umfasst die Vorrichtung eine Ionensprüheinrichtung zum Verringern der elektrostatischen Anziehungskräfte zwischen den Einzelbehältnissen und dem Transportbehälter. Durch die Ionensprüheinrichtung kann die Ablösung der Einzelbehältnisse von dem Transportbehälter weiter verbessert werden. Bevorzugt umfasst die Ionensprüheinrichtung wenigstens einen Ionensprühstab.

Das erfindungsgemäße System umfasst einen rahmenförmigen Transportbehälter, insbesondere Tray, in dem pharmazeutische Einzelbehältnisse, insbesondere Vials, gelagert sind, und eine Vorrichtung mit den oben beschriebenen Merkmalen zum Entnehmen der Einzelbehältnisse aus dem Transportbehälter.

Hinsichtlich der mit dem System erzielbaren Vorteile wird auf die diesbezüglichen Ausführungen zur Vorrichtung bzw. zum Verfahren verwiesen. Zur weiteren Ausgestaltung des Systems können die im Zusammenhang mit der Vorrichtung bzw. dem Verfahren beschriebenen Merkmale dienen.

Gemäß einer bevorzugten Ausführungsform des Systems ist vorgesehen, dass der Transportbehälter einen insbesondere umlaufenden Rand umfasst, der eine Aufnahme des Transportbehälters für die Einzelbehältnisse umschließt, und dass einander gegenüberliegende Randabschnitte des Rands des Transportbehälters gleichzeitig auf einer Hubfläche eines jeweils anderen der Hubelemente anordenbar sind. Vorzugsweise umfasst der Rand eine umlaufende Auskragung. Hierdurch wird eine besonders sichere Anordnung des Transportbehälters auf den Hubflächen der Hubelemente ermöglicht.

Das erfindungsgemäße Verfahren zum Entnehmen von pharmazeutischen Einzelbehältnissen, insbesondere Vials, aus einem wannenförmigen Transportbehälter, insbesondere Tray, umfasst:
Anordnen des Transportbehälters auf einer Ablagestruktur mit einer insbesondere horizontal erstreckten Ablagefläche, wobei eine Unterseite eines Bodens des Transportbehälters von der Ablagefläche weggerichtet wird, und wobei die Einzelbehältnisse auf der Ablagefläche oder vertikal beabstandet oberhalb der Ablagefläche angeordnet werden. Der Transportbehälter wird also quasi gewendet mit den darin angeordneten Einzelbehältnissen auf der Ablagestruktur angeordnet. Vorzugsweise wird der Transportbehälter mit den darin angeordneten Einzelbehältnissen zunächst durch eine Wendeeinrichtung gewendet, sodass die Unterseite des Bodens dann vertikal nach oben gerichtet ist. Anschließend wird der Transportbehälter mit den Einzelbehältnissen von der Wendeeinrichtung auf die Ablagestruktur verlagert. Bevorzugt wird der Transportbehälter mit den darin angeordneten Einzelbehältnissen von der Wendeeinrichtung auf die Ablagestruktur geschoben.

Abnehmen des Transportbehälters von den Einzelbehältnissen, wobei die Ablagestruktur während eines Entnahmevorgangs wenigstens zeitweise zu einer insbesondere horizontalen Schwingungsbewegung angeregt wird, welche auf den Transportbehälter und/oder auf die Einzelbehältnisse übertragen wird, um die Einzelbehältnisse von dem Transportbehälter zu lösen. Die Anregung der Schwingungsbewegung kann dabei zu verschiedenen Zeitpunkten oder Zeitabschnitten während des Entnahmevorgangs stattfinden. Vorzugsweise wird die Ablagestruktur wenigstens zeitweise während des Abnehmens des Transportbehälters zu der Schwingungsbewegung angeregt.

Vorteile und Weiterbildungsmöglichkeiten der Vorrichtung sind als ebenso in Bezug auf das Verfahren beschrieben zu verstehen und umgekehrt sind Vorteile und Weiterbildungsmöglichkeiten des Verfahrens als ebenso in Bezug auf die Vorrichtung beschrieben zu verstehen.

Gemäß einer bevorzugten Ausführungsform des Verfahrens ist vorgesehen, dass der Transportbehälter zunächst durch eine von der Ablagefläche weggerichtete Druckkraft angehoben wird, und dass der angehobene Transportbehälter gegriffen und entfernt wird. Ein Greifen des Transportbehälters kann zu einer Verformung des Transportbehälters führen. Würde der Transportbehälter direkt gegriffen werden, könnte die damit einhergehende Verformung die Entnahme der Einzelbehältnisse erschweren. Ein Anheben mittels der Druckkraft führt hingegen allenfalls zu einer geringfügigen Verformung des Transportbehälters. Weil der Transportbehälter zunächst durch die Druckkraft angehoben wird, wird vor dem darauffolgenden Greifen des Transportbehälters bereits eine Trennung von den Einzelbehältnissen vorgenommen, sodass letztlich eine besonders sichere Entnahme der Einzelbehältnisse gewährleistet ist.

Gemäß einer bevorzugten Ausführungsform ist vorgesehen, dass die Ablagestruktur während des Anhebens durch die Druckkraft zu der Schwingungsbewegung angeregt wird. Hierdurch wird eine besonders wirksame Ablösung der Einzelbehältnisse realisiert. Insbesondere wird die Schwingungsbewegung durch Hubelemente, welche den Transportbehälter mit der Druckkraft beaufschlagen, auf den Transportbehälter übertragen. Vorzugsweise wird das Anregen der Schwingungsbewegung spätestens mit Greifen des Transportbehälters beendet. Eine Fortsetzung der Schwingungsbewegung könnte bei entferntem Transportbehälter dazu führen, dass eines oder mehrere der Einzelbehältnisse umkippen.

Die Erfindung wird im Folgenden anhand der Figuren näher beschrieben, wobei gleiche oder funktional gleiche Elemente gegebenenfalls lediglich einmal mit Bezugszeichen versehen sind.

Die Figurenbeschreibung dient als Beispiel und ist nicht einschränkend zu verstehen. Es zeigen
- Fig. 1: eine perspektivische Ansicht eines Transportbehälters mit darin angeordneten pharmazeutischen Einzelbehältnissen,
- Fig. 2: eine perspektivische Ansicht einer Vorrichtung zum Entnehmen der Einzelbehältnisse aus dem Transportbehälter,
- Fig. 3: einen Ausschnitt aus Fig. 2 in vergrößerter Darstellung,
- Fig. 4: eine Ansicht aus seitlicher Perspektive gemäß einer in Fig. 3 mit IV bezeichneten Blickrichtung,
- Fig. 5: eine der Fig. 2 entsprechende Ansicht nach Entfernen des Transportbehälters.

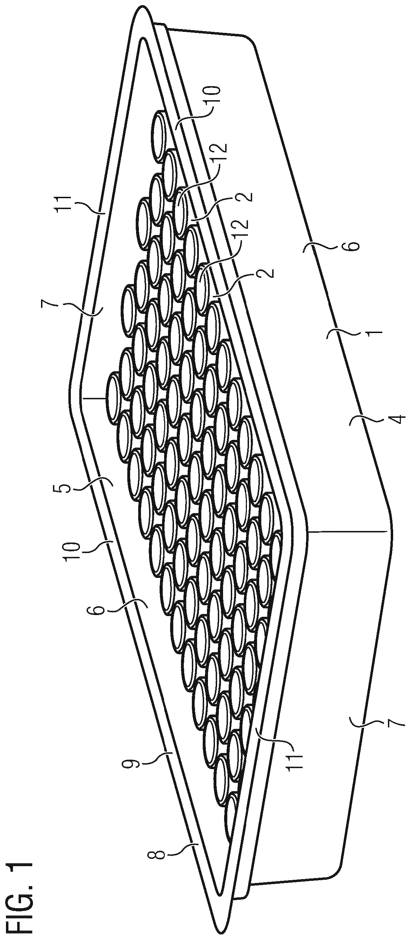

In Figur 1 ist ein Transportbehälter 1 mit einer Vielzahl von darin angeordneten pharmazeutischen Einzelbehältnissen 2 dargestellt.

Der Transportbehälter 1 ist wannenförmig ausgebildet. Hierzu umfasst der Transportbehälter 1 einen in Figur 1 nicht erkenntlichen Boden 3 und eine umlaufende Seitenwand 4. Die Seitenwand 4 umschließt eine Aufnahme 5 des Transportbehälters 1, in welcher die Einzelbehältnisse 2 angeordnet sind. Der Transportbehälter 1 ist vorliegend rechteckförmig ausgebildet. Die Seitenwand 4 umfasst hierzu zwei einander gegenüberliegende Längsseiten 6 und zwei einander gegenüberliegende Querseiten 7.

Ein bezogen auf den Boden 3 distales Ende der Seitenwand 4 bildet einen Rand 8 des Transportbehälters 1. Der Rand 8 umfasst eine umlaufende Auskragung 9. In Anbetracht der rechteckförmigen Ausbildung des Transportbehälters 1 umfasst der Rand 8 zwei einander gegenüberliegende Längsränder 10 und zwei einander gegenüberliegende Querränder 11. Vorliegend ist der Transportbehälter 1 ein Tray 1.

Die pharmazeutischen Einzelbehältnisse 2 sind vorliegend als Vials 2 bzw. Injektionsfläschchen 2 ausgebildet. Die Unterseiten 12 der Einzelbehältnisse 2 sind von dem Boden 3 des Transportbehälters 1 weggerichtet. Die Einzelbehältnisse 2 sind lose nebeneinanderstehend in der Aufnahme 5 des Transportbehälters 1 angeordnet.

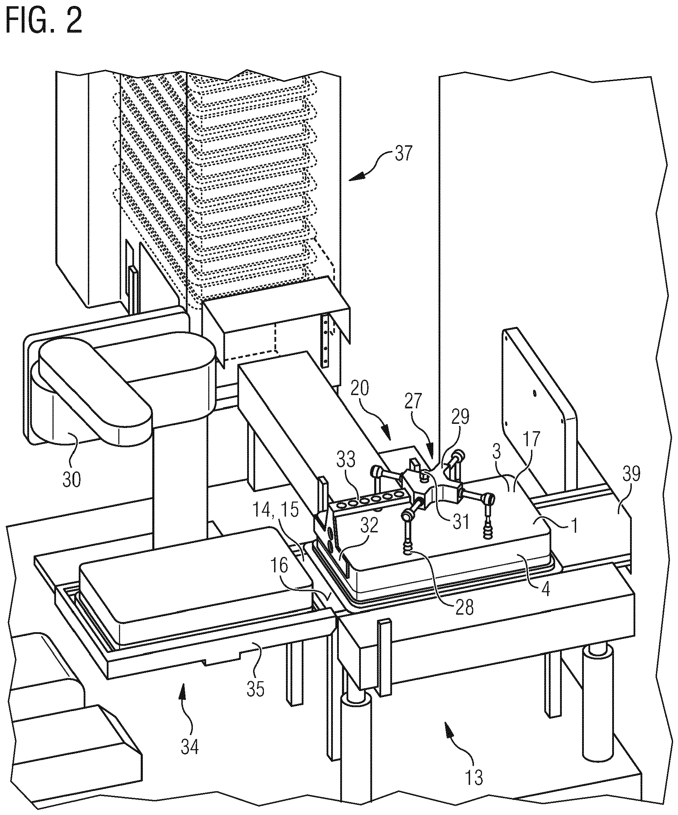

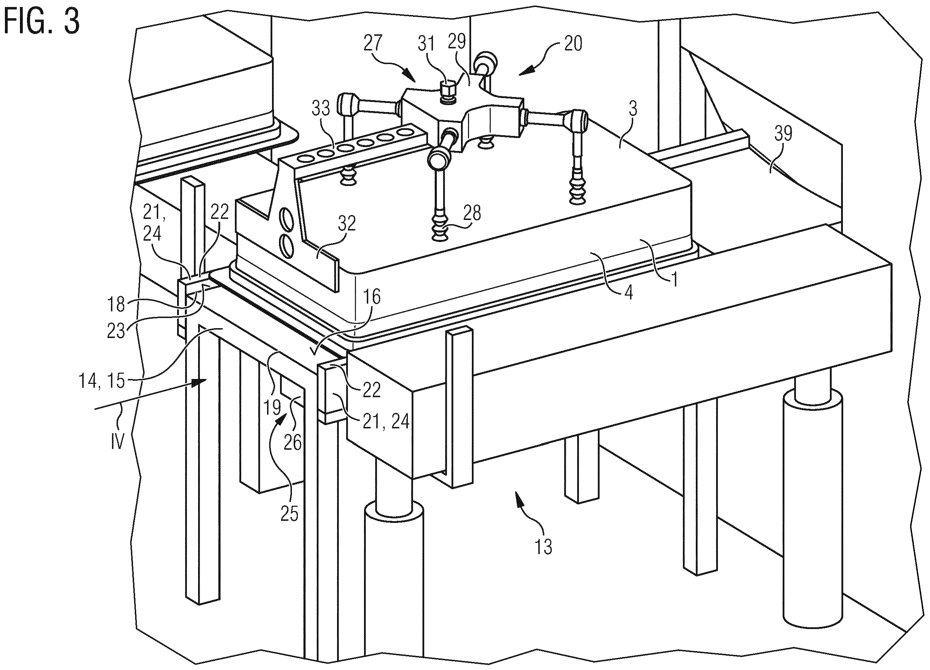

Im Folgenden wird mit Bezug auf die Figuren 2 bis 5 eine Vorrichtung 13 zum Entnehmen der Einzelbehältnisse 2 aus dem Transportbehälter 1 näher erläutert. Die Vorrichtung 13, der Transportbehälter 1 und die Einzelbehältnisse 2 bilden gemeinsam ein System 40. Die Figuren 2 bis 5 zeigen verschiedene Abbildungen der Vorrichtung 13 während eines Entnahmevorgangs, bei dem die Einzelbehältnisse 2 aus dem Transportbehälter 1 entnommen werden. Der Entnahmevorgang basiert auf einer schwerkraftgestützten Entnahme der Einzelbehältnisse 2 aus dem Transportbehälter 1.

Die Vorrichtung 13 umfasst eine plattenförmige Ablagestruktur 14. Vorliegend ist die Ablagestruktur 14 die Tischplatte eines Ablagetischs 15. Die Ablagestruktur 14 umfasst eine horizontal erstreckte und vertikal nach oben gerichtete Ablagefläche 16. Der Transportbehälter 1 mit den darin angeordneten Einzelbehältnissen 2 ist derart auf der Ablagestruktur 14 anordenbar, dass eine Unterseite 17 des Bodens 3 des Transportbehälters 1 von der Ablagefläche 16 weggerichtet ist. Eine solche Anordnung des Transportbehälters 1 ist in den Figuren 2,3 und 4 dargestellt. Die Einzelbehältnisse 2 sind bei einer entsprechenden Anordnung des Transportbehälters 1 auf der Ablagefläche 16 oder vertikal beanstandet oberhalb der Auflagefläche 16 angeordnet. Die Ablagefläche 16 ist also derart dimensioniert, dass sämtliche in dem Transportbehälter 1 angeordneten Einzelbehältnisse 2 gleichzeitig nebeneinander auf der Ablagefläche 16 aufstehen können. Vorliegend ist die Ablagefläche 16 rechteckförmig ausgebildet und wird durch zwei einander gegenüberliegende Längsränder 18 und zwei einander gegenüberliegende Querränder 19 begrenzt.

Die Vorrichtung 1 umfasst außerdem eine Abnahmeeinrichtung 20 zum Abnehmen des Transportbehälters 1 von den Einzelbehältnissen 2.

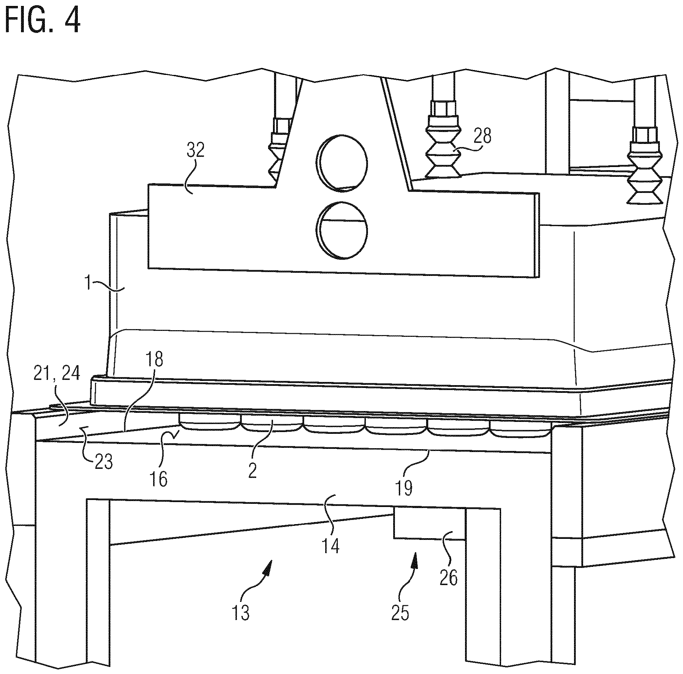

Die Abnahmeeinrichtung 20 umfasst zwei Hubelemente 21 zum Anheben des Transportbehälters 1. Die Hubelemente 21 sind auf einander gegenüberliegenden Seiten der Ablagefläche 16 angeordnet und senkrecht zu der Ablagefläche 16 verlagerbar. Vorliegend sind die Hubelemente 21 an der Ablagestruktur 14 gelagert. Die Hubelemente 21 sind für eine gemeinsame Verlagerung in vertikaler Richtung ausgebildet. Vorzugsweise sind die Hubelemente 21 derart mechanisch miteinander gekoppelt, dass die Hubelemente 21 nur gemeinsam in vertikaler Richtung verlagerbar sind. Die Hubelemente 21 umfassen jeweils eine horizontal erstreckte und vertikal nach oben gerichtete Hubfläche 22. In einer Ausgangsschiebestellung sind die Hubelemente 21 derart angeordnet, dass die Hubflächen 22 bündig mit der Ablagefläche 16 abschließen. In der in Figur 4 gezeigten Endschiebestellung sind die Hubelemente 21 ausgehend von der Ausgangsschiebestellung vertikal nach oben verlagert, sodass die Hubflächen 22 in vertikaler Richtung höher angeordnet sind als die Ablagefläche 16.

Die Hubelemente 21 sind an einem jeweils anderen Längsrand 18 der Ablagefläche 16 angeordnet. Die Hubelemente 21 umfassen jeweils eine Führungsfläche 23, die in wenigstens einer Schiebestellung der Hubelemente 21, jedenfalls in der zuvor erwähnten Endschiebestellung, abstützungswirksam für mehrere auf der Ablagefläche 16 angeordnete Einzelbehältnisse 2 ist. Die Führungsflächen 23 sind also derart dimensioniert, dass sich mehrere auf der Ablagefläche 16 angeordnete Einzelbehältnisse 2 gleichzeitig an den Führungsflächen 23 abstützen können. Vorliegend erstrecken sich die Hubelemente 21 bzw. deren Führungsflächen 23 jeweils entlang der gesamten Längserstreckung des jeweiligen Längsrands 18. Dadurch wird ein Herunterfallen der Einzelbehältnisse 2 von der Ablagefläche 16 über die Längsränder 18 wirksam vermieden. Die Hubelemente 21 bilden Seitenführungen 24 der Ablagefläche 16.

Der Transportbehälter 1 ist in den Figuren 2,3 und 4 derart angeordnet, dass die beiden Längsrandabschnitte 10 des Transportbehälters 1 auf einer jeweils anderen der Hubflächen 22 angeordnet sind. Die Hubelemente 21 können den Transportbehälter 1 demnach durch Verlagerung vertikal nach oben mit einer Druckkraft beaufschlagen, um den Transportbehälter 1 anzuheben.

In der Regel führt ein Anheben des Transportbehälters 1 dazu, dass die Einzelbehältnisse 2 auf der Ablagefläche 16 zurückbleiben. Es können jedoch Reibungskräfte und/oder elektrostatische Anziehungskräfte zwischen den Einzelbehältnissen 2 und dem Transportbehälter 1 wirken, durch welche die Einzelbehältnisse 2 an dem Transportbehälter 1 gehalten werden. Dies kann dazu führen, dass beim Anheben des Transportbehälters 1 eines der Einzelbehältnisse 2 oder mehrere der Einzelbehältnisse 2 mit dem Transportbehälter 1 angehoben werden.

Um die Einzelbehältnisse 2 sicher von dem Transportbehälter 1 zu lösen, umfasst die Vorrichtung 13 eine Schwingungserzeugungseinrichtung 25. Vorliegend umfasst die Schwingungserzeugungseinrichtung 25 als Schwingungserzeuger einen Unwuchtmotor 26. Der Unwuchtmotor 26 ist an einer Unterseite der Ablagestruktur 14 angeordnet und mechanisch mit der Ablagestruktur 14 gekoppelt. Durch den Unwuchtmotor 26 ist die Ablagestruktur 14 zu einer Schwingungsbewegung anregbar. Die Schwingungsbewegung ist auf den Transportbehälter 1 und/oder auf die Einzelbehältnisse 2 übertragbar, insbesondere mittels der Hubelemente 21. Durch die Schwingungsbewegung werden die Einzelbehältnisse 2 von dem Transportbehälterbehälter 1 gelöst, sodass sämtliche Einzelbehältnisse 2 beim Anheben des Transportbehälters 1 auf der Ablagefläche 16 verbleiben. Gemäß einem weiteren Ausführungsbeispiel umfasst die Schwingungserzeugungseinrichtung als Schwingungserzeuger wenigstens einen Magnetvibrator.

Die Abnahmeeinrichtung 20 umfasst außerdem eine Greifeinheit 27 zum Greifen des Transportbehälters 1. Die Greifeinheit 27 umfasst mehrere Saugelemente 28 zum Ansaugen der Unterseite 17 des Bodens 3 des Transportbehälters 1. Die Saugelemente 28 sind länglich ausgebildet und definieren gemeinsam eine Saugebene. Die Saugelemente 28 sind an einer gemeinsamen Tragstruktur 29 der Greifeinheit 27 angeordnet. Vorliegend sind vier Saugelemente 28 vorhanden, deren freie Saugenden rechteckförmig, insbesondere quadratförmig, in der Saugebene angeordnet sind.

Die Abnahmeeinrichtung 20 umfasst außerdem eine Handhabungseinrichtung 30 zum Handhaben der Greifeinheit 27. Die Handhabungseinrichtung 30 ist ausgebildet, um die Greifeinheit 27 an den Transportbehälter 1 heranzubewegen. Vorliegend ist die Handhabungseinrichtung 30 als Vierachsroboter ausgebildet. Die Tragstruktur 29 umfasst an ihrer von der Saugebene abgewandten Seite einen Knauf 31, der durch die Handhabungseinrichtung 30 greifbar ist.

Die Greifeinheit 27 umfasst außerdem eine vorliegend T-förmig ausgebildete Handhabungseinheit 32 zum Handhaben der Seitenwand 4 des Transportbehälters 1. Die Handhabungseinheit 32 umfasst hierzu eine Handhabungsfläche, die gewinkelt zu der Saugebene ausgerichtet ist. Die Funktion der Handhabungseinheit 32 wird nachfolgend im Zusammenhang mit dem Verfahren zur Entnahme der Einzelbehältnisse 2 erläutert. Die Handhabungsfläche liegt in den Figuren 2 bis 5 an der Seitenwand 4 des Transportbehälters 1 an und ist deshalb nicht erkenntlich. Vorzugsweise beträgt ein Winkel zwischen der Handhabungsfläche und der Saugebene 80° bis 100°. Vorliegend ist die Handhabungsfläche senkrecht zu der Saugebene ausgerichtet. Die Handhabungseinheit 32 ist durch eine Strebe 33 an der Tragstruktur 29 befestigt. Die Strebe 33 ist vorliegend parallel zu der Saugebene erstreckt.

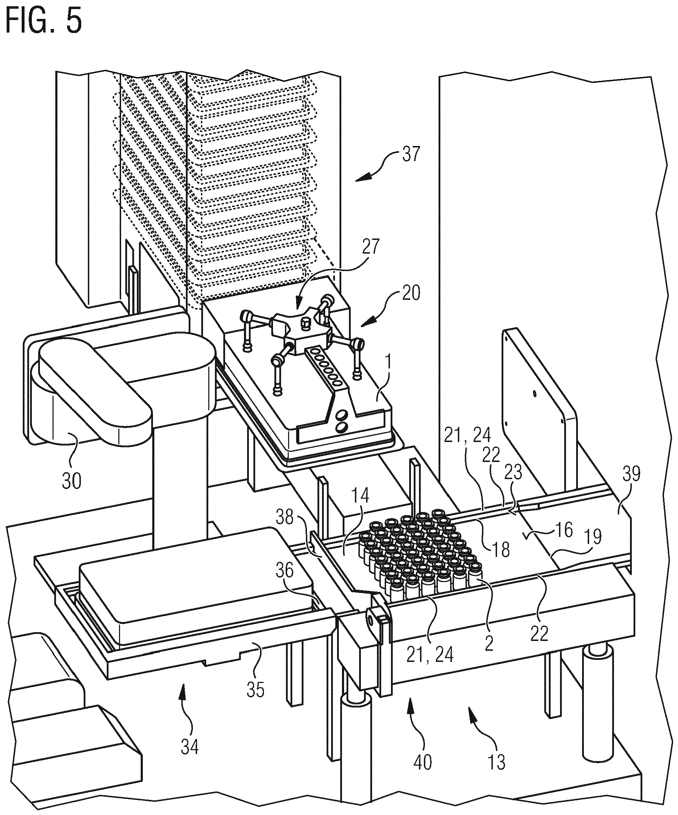

Die Vorrichtung 1 umfasst außerdem eine Wendeeinrichtung 34 zum Wenden des Transportbehälters 1 mit den darin angeordneten Einzelbehältnissen 2. Typischerweise wird der Transportbehälter 1 vor dem Entnahmevorgang derart gehandhabt, dass die Unterseite 17 des Bodens 3 vertikal nach unten gerichtet ist. So wird vermieden, dass die Einzelbehältnisse 2 aus dem Transportbehälter 1 herausfallen. Für den schwerkraftgestützten Entnahmevorgang muss der Transportbehälter 1 jedoch gewendet werden, sodass die Unterseite 17 des Bodens 3 dann vertikal nach oben gerichtet ist, wie in den Figuren 2 bis 5 dargestellt. Hierzu ist die Wendeeinrichtung 34 vorhanden. Die Wendeeinrichtung 34 umfasst eine Wendeeinheit 35, die zum formschlüssigen Halten eines Transportbehälters ausgebildet ist. Die Wendeeinheit 35 ist um eine horizontal erstreckte Drehachse drehbar, um einen gehaltenen Transportbehälter zu wenden. Die Wendeeinheit 35 umfasst eine Wendeplatte mit einer Tragfläche 36. Vor dem Wenden ist die Wendeplatte vertikal oberhalb des gehaltenen Transportbehälters angeordnet. Nach dem Wenden ist der gewendete Transportbehälter mit den darin befindlichen Einzelbehältnissen auf der Tragfläche 36 der Wendeplatte angeordnet, wie in den Figuren 2 und 5 dargestellt.

Die Vorrichtung 13 umfasst außerdem einen der Ablagefläche 16 räumlich zugeordneten Schieber 38, welcher der Übersichtlichkeit halber nur in Figur 5 dargestellt ist. Der Schieber 38 ist entlang einer parallel zu den Längsrändern 18 der Ablagefläche 16 erstreckten Schiebeachse verlagerbar, um auf der Ablagefläche 16 angeordnete Einzelbehältnisse 2 auf eine weitere Ablagestruktur 39 einer der Vorrichtung 13 funktionstechnisch nachgeschalteten weiteren Vorrichtung zu schieben. Außerdem ist der Schieber 38 um die Schiebeachse schwenkbar. Die weitere Vorrichtung ist beispielsweise ausgebildet, um Arzneimittel und/oder medizinische Wirkstoffe in die Einzelbehältnisse 2 zu füllen.

Im Folgenden wird ein mittels der Vorrichtung 13 durchgeführter Entnahmevorgang näher erläutert. Es wird dabei davon ausgegangen, dass der Transportbehälter 1 zu Beginn des Entnahmevorgangs derart auf der Tragfläche 36 angeordnet ist, dass die Unterseite 17 des Bodens 3 von der Tragfläche 36 weggerichtet ist. Die Wendeplatte 35 ist derart angeordnet, dass die Tragfläche 36 mit der Ablagefläche 16 bündig abschließt. Der Schieber 38 ist ausgehend von der in Figur 5 dargestellten Schwenkstellung um 90° geschwenkt, sodass er senkrecht zu der Ablagefläche 16 erstreckt ist.

Zunächst wird der Transportbehälter 1 derart auf der Ablagestruktur 14 angeordnet, dass die Unterseite 17 des Bodens 3 von der Ablagefläche 16 weggerichtet ist und die Einzelbehältnisse auf der Ablagefläche 16 oder vertikal beabstandet oberhalb der Ablagefläche 16 angeordnet sind, wie beispielsweise in Figur 2 dargestellt. Vorzugsweise schiebt die Handhabungseinrichtung 30 den Transportbehälter 1 mittels der Handhabungsfläche der Handhabungseinheit 32 von der Wendeplatte 35 auf die Ablagestruktur 14. Die Hubelemente 21 befinden sich dabei in der Ausgangsschiebestellung, sodass die Längsrandabschnitte 10 des Rands 8 des Transportbehälters 1 auf die Hubflächen 22 der Hubelemente 21 aufgeschoben werden.

Anschließend werden die Hubelemente 21 vertikal nach oben verlagert. Dadurch wird der Transportbehälter 1 mit einer vertikal nach oben gerichteten Druckkraft beaufschlagt und angehoben. Während des Anhebens des Transportbehälters 1 wird durch den Unwuchtmotor 26 eine Schwingungsbewegung der Ablagestruktur 14 angeregt. Vorzugsweise wird die Ablagestruktur 14 zu einer horizontalen Schwingungsbewegung angeregt. Die Schwingungsbewegung wird auf den Transportbehälter 1 und auf die Einzelbehältnisse 2 übertragen. Einzelbehältnisse 2, die durch Reibungskräfte und/oder elektrostatische Anziehungskräfte an dem Transportbehälter 1 gehalten werden, werden durch die Schwingungsbewegung von dem Transportbehälter 1 gelöst. Die Einzelbehältnisse 2 bleiben deshalb beim Anheben des Transportbehälters 1 auf der Ablagefläche 16 zurück.

Sobald die Hubelemente 21 ihre in Figur 4 gezeigte Endschiebestellung erreicht haben, wird der angehobene Transportbehälter 1 durch die Greifeinheit 27 gegriffen. Vorzugsweise wird die Greifeinheit 27 hierzu derart an dem Transportbehälter 1 angeordnet, dass die Handhabungsfläche an der Seitenwand des Transportbehälters 1 anliegt, wie beispielsweise in Figur 2 gezeigt. Der gegriffene Transportbehälter 1 wird dann von der Ablagestruktur 14 entfernt und einer Stapeleinheit 37 für Transportbehälter zugeführt. Die Einzelbehältnisse 2 sind dann aus dem Transportbehälter 1 entnommen, wie in Figur 5 erkenntlich.

Vorzugsweise werden die Einzelbehältnisse 2 anschließend zur weiteren Verarbeitung der weiteren Vorrichtung zugeführt. Hierzu wird der Schieber 38 in die in Figur 5 gezeigte Schwenkstellung geschwenkt. Anschließend wird der Schieber 38 entlang der Schiebeachse verschoben, wodurch die Einzelbehältnisse 2 auf die weitere Ablagestruktur 39 der weiteren Vorrichtung geschoben werden. Die Führungsflächen 23 der Hubelemente 21 verhindern dabei, dass die Einzelbehältnisse 2 über die Längsränder 18 von der Ablagefläche 16 herunterfallen.

Im Hinblick auf die Zeitpunkte bzw. Zeitabschnitte, zu denen der Unwuchtmotor 26 die Tragstruktur 14 zu der Schwingungsbewegung anregt, sind verschiedene Ausführungen des Verfahrens möglich. Bevorzugt regt der Unwuchtmotor 26 die Tragstruktur 14 jedenfalls zeitweise während des Anhebens des Transportbehälters 1 durch die Hubelemente 21 zu der Schwingungsbewegung an. Vorzugsweise regt der Unwuchtmotor 26 die Tragstruktur 14 nur während des Anhebens des Transportbehälters 1 durch die Hubelemente 21 zu der Schwingungsbewegung an. Vor Beginn des Anhebens und nach Abschluss des Anhebens wird die Tragstruktur 14 demnach nicht zu der Schwingungsbewegung angeregt. Alternativ wird die Tragstruktur 14 bereits vor Beginn des Anhebens des Transportbehälters 1 und/oder nach Abschluss des Anhebens des Transportbehälters 1 zu der Schwingungsbewegung angeregt.

## Patentansprüche

1. Vorrichtung (13) zum Entnehmen von pharmazeutischen Einzelbehältnissen (2), insbesondere Vials (2), aus einem wannenförmigen Transportbehälter (1), insbesondere Tray (1), mit einer plattenförmigen Ablagestruktur (14), die eine insbesondere horizontal erstreckte Ablagefläche (16) umfasst, wobei der Transportbehälter (1) derart auf der Ablagestruktur (14) anordenbar ist, dass eine Unterseite (17) eines Bodens (3) des Transportbehälters (1) von der Ablagefläche (16) weggerichtet ist und die Einzelbehältnisse (2) auf der Ablagefläche (16) oder vertikal beabstandet oberhalb der Ablagefläche (16) angeordnet sind, und mit einer Abnahmeeinrichtung (20) zum Abnehmen des Transportbehälters (1) von den Einzelbehältnissen (2), **dadurch gekennzeichnet, dass** der Ablagestruktur (14) eine Schwingungserzeugungseinrichtung (25) zugeordnet ist, die ausgebildet ist, um die Ablagestruktur (14) während eines Entnahmevorgangs wenigstens zeitweise zu einer insbesondere horizontalen Schwingungsbewegung anzuregen, welche auf den Transportbehälter (1) und/oder auf die Einzelbehältnisse (2) übertragbar ist, um die Einzelbehältnisse (2) von dem Transportbehälter (1) zu lösen.

2. Vorrichtung (13) nach Anspruch 1, **dadurch**
**gekennzeichnet, dass** die Schwingungserzeugungseinrichtung (25) wenigstens einen in die Ablagestruktur (14) integrierten Schwingungserzeuger umfasst, und/oder dass die Schwingungserzeugungseinrichtung (25) wenigstens einen unabhängig von der Ablagestruktur (14) handhabbaren und mit der Ablagestruktur (14) mechanisch gekoppelten Schwingungserzeuger umfasst.

3. Vorrichtung (13) nach einem der Ansprüche 1 und 2, **dadurch gekennzeichnet, dass** die Schwingungserzeugungseinrichtung (25) wenigstens einen Unwuchtmotor (26) und/oder wenigstens einen Magnetvibrator als Schwingungserzeuger umfasst.

4. Vorrichtung (13) nach einem der Ansprüche 1 bis 3, **dadurch gekennzeichnet, dass** die Abnahmeeinrichtung (20) wenigstens zwei Hubelemente (21) zum Anheben des Transportbehälters (1) umfasst, wobei die Hubelemente (21) auf einander gegenüberliegenden Seiten der Ablagefläche (16) angeordnet und senkrecht zu der Ablagefläche (16) verlagerbar sind.

5. Vorrichtung (13) nach Anspruch 4, **dadurch gekennzeichnet, dass** die Hubelemente (21) an einem jeweils anderen Rand (18) der Ablagefläche (16) angeordnet sind, und dass die Hubelemente (21) jeweils eine Führungsfläche (23) umfassen, die abstützungswirksam für mehrere auf der Ablagefläche (16) angeordnete Einzelbehältnisse (2) ist.

6. Vorrichtung (13) nach einem der Ansprüche 1 bis 5, **dadurch gekennzeichnet, dass** die Abnahmeeinrichtung (20) eine Greifeinheit (27) zum Greifen des Transportbehälters (1) umfasst.

7. Vorrichtung (13) nach Anspruch 6, **dadurch gekennzeichnet, dass** die Greifeinheit (27) wenigstens ein Saugelement (28) zum Ansaugen der Unterseite (17) des Bodens (3) des Transportbehälters (1) umfasst, insbesondere wobei das Saugelement (28) an einer Tragstruktur (29) der Greifeinheit (27) angeordnet ist.

8. Vorrichtung (13) nach einem der Ansprüche 6 und 7, **dadurch gekennzeichnet, dass** die Greifeinheit (27) eine Handhabungsfläche zum Handhaben einer Seitenwand (4) des wannenförmigen Transportbehälters (1) umfasst, wobei die Handhabungsfläche gewinkelt zu einer Saugebene der Greifeinheit (27) ausgerichtet ist.

9. Vorrichtung (13) nach einem der Ansprüche 6 bis 8, **dadurch gekennzeichnet, dass** sie eine Handhabungseinrichtung (30) umfasst, die ausgebildet ist, um die Greifeinheit (27) an den Transportbehälter (1) heranzubewegen.

10. Vorrichtung (13) nach einem der Ansprüche 1 bis 9, **dadurch gekennzeichnet, dass** sie eine Ionensprüheinrichtung zum Verringern der elektrostatischen Anziehungskräfte zwischen den Einzelbehältnissen (2) und dem Transportbehälter (1) umfasst, insbesondere wobei die Ionensprüheinrichtung wenigstens einen Ionensprühstab umfasst.

11. System (40) umfassend einen wannenförmigen Transportbehälter (1), insbesondere Tray (1), in dem pharmazeutische Einzelbehältnisse (2), insbesondere Vials (2), gelagert sind, und eine Vorrichtung (13) nach einem der Ansprüche 1 bis 10 zum Entnehmen der Einzelbehältnisse (2) aus dem Transportbehälter (1).

12. System (40) nach Anspruch 11, **dadurch gekennzeichnet, dass** der Transportbehälter (1) einen insbesondere umlaufenden Rand (8) umfasst, der eine Aufnahme (5) des Transportbehälters (1) für die Einzelbehältnisse (2) umschließt, und dass einander gegenüberliegende Randabschnitte (10) des Rands (8) des Transportbehälters (1) gleichzeitig auf einer Hubfläche (22) eines jeweils anderen der Hubelemente (21) anordenbar sind.

13. Verfahren zum Entnehmen von pharmazeutischen Einzelbehältnissen (2), insbesondere Vials (2), aus einem wannenförmigen Transportbehälter (1), insbesondere Tray (1), umfassend:
a. Anordnen des Transportbehälters (1) auf einer Ablagestruktur (14) mit einer insbesondere horizontal erstreckten Ablagefläche (16), wobei eine Unterseite (17) eines Bodens (3) des Transportbehälters (1) von der Ablagefläche (16) weggerichtet wird, und wobei die Einzelbehältnisse (2) auf der Ablagefläche (16) oder vertikal beabstandet oberhalb der Ablagefläche (16) angeordnet werden,
b. Abnehmen des Transportbehälters (1) von den Einzelbehältnissen (2), wobei die Ablagestruktur (14) während eines Entnahmevorgangs wenigstens zeitweise zu einer insbesondere horizontalen Schwingungsbewegung angeregt wird, welche auf den Transportbehälter (1) und/oder auf die Einzelbehältnisse (2) übertragen wird, um die Einzelbehältnisse (2) von dem Transportbehälter (1) zu lösen.

14. Verfahren nach Anspruch 13, **dadurch gekennzeichnet, dass** der Transportbehälter (1) zunächst durch eine von der Ablagefläche (16) weggerichtete Druckkraft angehoben wird, und dass der angehobene Transportbehälter (1) gegriffen und entfernt wird.

15. Verfahren nach Anspruch 14, **dadurch gekennzeichnet, dass** die Ablagestruktur (14) während des Anhebens durch die Druckkraft zu der Schwingungsbewegung angeregt wird.

## Claims

1. Apparatus (13) for removing individual pharmaceutical containers (2), in particular vials (2), from a trough-shaped transport container (1), in particular a tray (1), having a planar depositing structure (14) which comprises a depositing surface (16) extending in particular horizontally, it being possible to arrange the transport container (1) on the depositing structure (14) in such a way that an underside (17) of a base (3) of the transport container (1) is directed away from the depositing surface (16) and the individual containers (2) are arranged on the depositing surface (16) or vertically above the depositing surface (16) with spacing, and having a take-off device (20) for taking the transport container (1) off the individual containers (2), **characterized in that** the depositing structure (14) is assigned a vibration generating device (25) which is designed to excite the depositing structure (14) during a removal process at least temporarily to perform an in particular horizontal vibrational movement which can be transferred to the transport container (1) and/or to the individual containers (2) in order to release the individual containers (2) from the transport container (1).

2. Apparatus (13) according to claim 1, **characterized in that** the vibration generating device (25) comprises at least one vibration generator integrated into the depositing structure (14), **and/or in that** the vibration generating device (25) comprises at least one vibration generator that can be handled independently of the depositing structure (14) and is mechanically coupled to the depositing structure (14).

3. Apparatus (13) according to any of claims 1 and 2, **characterized in that** the vibration generating device (25) comprises at least one unbalance motor (26) and/or at least one magnetic vibrator as the vibration generator.

4. Apparatus (13) according to any of claims 1 to 3, **characterized in that** the take-off device (20) comprises at least two lifting elements (21) for lifting the transport container (1), the lifting elements (21) being arranged on opposite sides of the depositing surface (16) and being movable perpendicularly to the depositing surface (16).

5. Apparatus (13) according to claim 4, **characterized in that** the lifting elements (21) are each arranged on a different edge (18) of the depositing surface (16), **and in that** the lifting elements (21) each comprise a guide surface (23) which is effective at supporting a plurality of individual containers (2) arranged on the depositing surface (16).

6. Apparatus (13) according to any of claims 1 to 5, **characterized in that** the take-off device (20) comprises a gripping unit (27) for gripping the transport container (1).

7. Apparatus (13) according to claim 6, **characterized in that** the gripping unit (27) comprises at least one suction element (28) for suctioning the underside (17) of the base (3) of the transport container (1), the suction element (28) in particular being arranged on a support structure (29) of the gripping unit (27).

8. Apparatus (13) according to any of claims 6 and 7, **characterized in that** the gripping unit (27) comprises a handling surface for handling a side wall (4) of the trough-shaped transport container (1), the handling surface being oriented at an angle to a suction plane of the gripping unit (27).

9. Apparatus (13) according to any of claims 6 to 8, **characterized in that** it comprises a handling device (30) which is designed to move the gripping unit (27) toward the transport container (1).

10. Apparatus (13) according to any of claims 1 to 9, **characterized in that** it comprises an ion spray device for reducing the electrostatic attraction forces between the individual containers (2) and the transport container (1), the ion spray device in particular comprising at least one ion spray rod.

11. System (40) comprising a trough-shaped transport container (1), in particular a tray (1), in which individual pharmaceutical containers (2), in particular vials (2), are stored, and an apparatus (13) according to any of claims 1 to 10 for removing the individual containers (2) from the transport container (1).

12. System (40) according to claim 11, **characterized in that** the transport container (1) comprises an in particular all-round edge (8) which encloses a receiving space (5) of the transport container (1) for the individual containers (2), **and in that** opposite edge portions (10) of the edge (8) of the transport container (1) can each be arranged simultaneously on a lifting surface (22) of a different one of the lifting elements (21).

13. Method for removing individual pharmaceutical containers (2), in particular vials (2), from a trough-shaped transport container (1), in particular a tray (1), comprising:
a. arranging the transport container (1) on a depositing structure (14) comprising a depositing surface (16) extending in particular horizontally, wherein an underside (17) of a base (3) of the transport container (1) is directed away from the depositing surface (16), and wherein the individual containers (2) are arranged on the depositing surface (16) or vertically above the depositing surface (16) with spacing,
b. taking the transport container (1) off the individual containers (2), wherein the depositing structure (14) is at least temporarily excited during a removal process to perform an in particular horizontal vibrational movement which is transferred to the transport container (1) and/or to the individual containers (2) in order to release the individual containers (2) from the transport container (1).

14. Method according to claim 13, **characterized in that** the transport container (1) is first lifted by a pressure force directed away from the depositing surface (16), **and in that** the lifted transport container (1) is gripped and removed.

15. Method according to claim 14, **characterized in that** the depositing structure (14) is excited to the vibrational movement by the pressure force during lifting.

## Revendications

1. Dispositif (13) permettant de prélever des contenants individuels (2) pharmaceutiques, en particulier des flacons (2), d'un récipient de transport (1) en forme d'auge, en particulier d'un plateau (1), comportant une structure de dépôt (14) en forme de plaque qui comprend une surface de dépôt (16) s'étendant en particulier horizontalement, le récipient de transport (1) pouvant être disposé sur la structure de dépôt (14) de telle sorte qu'une face inférieure (17) d'un fond (3) du récipient de transport (1) est orientée à l'opposé de la surface de dépôt (16) et que les contenants individuels (2) sont disposés sur la surface de dépôt (16) ou à une distance verticale au-dessus de la surface de dépôt (16), et comportant un appareil d'enlèvement (20) permettant d'enlever le récipient de transport (1) des contenants individuels (2), **caractérisé en ce qu'**à la structure de dépôt (14) est associé un appareil de génération de vibrations (25) qui est conçu pour exciter la structure de dépôt (14) lors d'une opération de prélèvement, au moins par intermittence, de façon à effectuer un mouvement vibratoire, en particulier horizontal, qui peut être transmis au récipient de transport (1) et/ou aux contenants individuels (2), afin de détacher les contenants individuels (2) du récipient de transport (1).

2. Dispositif (13) selon la revendication 1, **caractérisé en ce que** l'appareil de génération de vibrations (25) comprend au moins un générateur de vibrations intégré dans la structure de dépôt (14), **et/ou en ce que** l'appareil de génération de vibrations (25) comprend au moins un générateur de vibrations pouvant être manipulé indépendamment de la structure de dépôt (14) et accouplé mécaniquement à la structure de dépôt (14).

3. Dispositif (13) selon l'une des revendications 1 et 2,
**caractérisé en ce que** l'appareil de génération de vibrations (25) comprend au moins un moteur déséquilibré (26) et/ou au moins un vibrateur magnétique comme générateur de vibrations.

4. Dispositif (13) selon l'une des revendications 1 à 3, **caractérisé en ce que** l'appareil d'enlèvement (20) comprend au moins deux éléments de levage (21) permettant de soulever le récipient de transport (1), les éléments de levage (21) étant disposés sur des côtés opposés l'un à l'autre de la surface de dépôt (16) et étant déplaçables perpendiculairement à la surface de dépôt (16).

5. Dispositif (13) selon la revendication 4, **caractérisé en ce que** les éléments de levage (21) sont disposés sur un autre bord (18) respectif de la surface de dépôt (16), **et en ce que** les éléments de levage (21) comprennent respectivement une surface de guidage (23) qui est efficace en termes de soutien pour plusieurs contenants individuels (2) disposés sur la surface de dépôt (16).

6. Dispositif (13) selon l'une des revendications 1 à 5, **caractérisé en ce que** l'appareil d'enlèvement (20) comprend une unité de préhension (27) permettant de saisir le récipient de transport (1).

7. Dispositif (13) selon la revendication 6, **caractérisé en ce que** l'unité de préhension (27) comprend au moins un élément d'aspiration (28) permettant d'aspirer la face inférieure (17) du fond (3) du récipient de transport (1), l'élément d'aspiration (28) étant en particulier disposé sur une structure porteuse (29) de l'unité de préhension (27).

8. Dispositif (13) selon l'une des revendications 6 et 7,
**caractérisé en ce que** l'unité de préhension (27) comprend une surface de manipulation permettant de manipuler une paroi latérale (4) du récipient de transport (1) en forme d'auge, la surface de manipulation étant orientée de manière inclinée par rapport à un plan d'aspiration de l'unité de préhension (27).

9. Dispositif (13) selon l'une des revendications 6 à 8,
**caractérisé en ce qu'**il comprend un appareil de manipulation (30) qui est conçu pour rapprocher l'unité de préhension (27) du récipient de transport (1).

10. Dispositif (13) selon l'une des revendications 1 à 9,
**caractérisé en ce qu'**il comprend un appareil de pulvérisation d'ions permettant de réduire les forces d'attraction électrostatiques entre les contenants individuels (2) et le récipient de transport (1), l'appareil de pulvérisation d'ions comprenant en particulier au moins une barre de pulvérisation d'ions.

11. Système (40) comprenant un récipient de transport (1) en forme d'auge, en particulier un plateau (1), dans lequel sont stockés des contenants individuels (2) pharmaceutiques, en particulier des flacons (2), et un dispositif (13) selon l'une des revendications 1 à 10 permettant de prélever les contenants individuels (2) du récipient de transport (1).

12. Système (40) selon la revendication 11, **caractérisé en ce que** le récipient de transport (1) comprend un bord (8), en particulier périphérique, qui entoure un logement (5) du récipient de transport (1) pour les contenants individuels (2), **et en ce que** des sections de bord (10), opposées l'une à l'autre, du bord (8) du récipient de transport (1) peuvent être disposées simultanément sur une surface de levage (22) d'un autre élément respectif parmi les éléments de levage (21).

13. Procédé permettant de prélever des contenants individuels (2) pharmaceutiques, en particulier des flacons (2), d'un récipient de transport (1) en forme d'auge, en particulier d'un plateau (1), comprenant :
a. la disposition du récipient de transport (1) sur une structure de dépôt (14) comportant une surface de dépôt (16) s'étendant en particulier horizontalement, une face inférieure (17) d'un fond (3) du récipient de transport (1) étant orientée à l'opposé de la surface de dépôt (16), et les contenants individuels (2) étant disposés sur la surface de dépôt (16) ou à une distance verticale au-dessus de la surface de dépôt (16),
b. l'enlèvement du récipient de transport (1) des contenants individuels (2), la structure de dépôt (14) étant excitée lors d'une opération de prélèvement, au moins par intermittence, de façon à effectuer un mouvement vibratoire, en particulier horizontal, qui est transmis au récipient de transport (1) et/ou aux contenants individuels (2), afin de détacher les contenants individuels (2) du récipient de transport (1).

14. Procédé selon la revendication 13, **caractérisé en ce que** le récipient de transport (1) est tout d'abord soulevé par une force de pression orientée à l'opposé de la surface de dépôt (16), **et en ce que** le récipient de transport (1) soulevé est saisi et enlevé.

15. Procédé selon la revendication 14, **caractérisé en ce que** la structure de dépôt (14) est excitée par la force de pression de façon à effectuer le mouvement vibratoire lors du soulèvement.
